# FASCICULE DE BREVET EUROPEEN

(11) **EP 0 852 867 B1**
(45) Date de publication et mention de la délivrance du brevet: **13.06.2001**
(21) Numéro de dépôt: 96932653.7
(22) Date de dépôt: 25.09.1996
(51) Int. Cl.: H04L 27/30, H04Q 1/453

(54) **PROCEDE ET SYSTEME POUR GENERER ET TRANSMETTRE RAPIDEMENT, A L'AIDE DE FREQUENCES VOCALES, UNE SEQUENCE DE CARACTERES**
VERFAHREN UND EINRICHTUNG ZUR SCHNELLENERZEUGUNG UND ÜBERTRAGUNG EINER ZEICHENSEQUENZ MITTELS SPRACHFREQUENZEN
METHOD AND SYSTEM FOR RAPIDLY GENERATING AND TRANSMITTING A CHARACTER SEQUENCE USING VOICE FREQUENCIES

(30) Priorité: 25.09.1995 FR 9511414
(43) Date de publication de la demande: 15.07.1998
(73) Titulaire: FINTEL S.A., 75008 Paris (FR)
(72) Inventeur: GORETA, Lucas, F-74000 Annecy (FR); DUROUX, Christian, F-75116 Paris (FR)
(74) Mandataire: Vidon, Patrice
(86) Numéro de dépôt international: FR9601500
(87) Numéro de publication internationale: WO9712467

(56) Documents cités:
- EP-A- 0 184 953
- EP-A- 0 318 454
- DE-A- 2 001 669
- DE-A- 3 026 016
- US-A- 3 810 019
- SIEMENS ZEITSCHRIFT, vol. 43, no. 3, Mars 1969, MUNICH (DE), pages 121-135, XP002006386 FISCHER ET AL.: "MODEMS FÜR DIE PARALLELÜBERTRAGUNG VON DATEN ÜBER FERNSPRECHWÄHLNETZE"

## Description

Le domaine de l'invention est celui de la transmission de données sur un réseau téléphonique.

Plus précisément, l'invention concerne un procédé et un système permettant de générer, à l'aide de fréquences vocales, une séquence de caractères et de la transmettre rapidement. Dans la présente description, par séquence de caractères, on entend une séquence d'au moins deux caractères, notamment, mais non exclusivement, un numéro de téléphone, un code d'identification, des données de chiffrement.

L'invention a de nombreuses applications. Ainsi le procédé et le système selon l'invention peut être utilisé pour sécuriser les transactions électroniques à distance, notamment celles relatives aux prestations téléphoniques pour lesquelles il est essentiel de pouvoir identifier rapidement le prestataire de la prestation téléphonique. Elle trouve plus particulièrement application lorsque les transactions électroniques à distance sont sécurisées au moyen d'objets portatifs au format carte de crédit, émettant des signaux vocaux et destinés à être utilisés en combinaison avec des récepteurs téléphoniques.

Traditionnellement, le codage multifréquence utilisé pour transmettre des informations de numérotation, d'identification ou de chiffrement sur le réseau téléphonique est un codage sur deux fréquences (ou DTMF, pour " Dual Tone Multi-frequency" en anglais).

Avec ce codage DTMF, chaque caractère est codé sous la forme d'une combinaison de deux fréquences (une fréquence haute et une fréquence basse) émises simultanément. Chacune des deux fréquences émises est choisie parmi deux groupes de quatre fréquences (à savoir un groupe de quatre fréquences basses et un groupe de quatre fréquences hautes). L'une des fréquences est choisie dans l'un des groupes l'autre fréquence est choisie dans l'autre groupe. On peut ainsi coder 4 x 4 = 16 caractères différents,soit généralement les dix chiffres de 0 à 9 et six caractères additionnels. Du fait qu'elles sont situées dans la bande passante téléphonique (de 100 à 3300 Hz), ces fréquences sont généralement appelées fréquences vocales ou acoustiques. Elles permettent la transmission du numéro de téléphone de l'appelé, et également, en phase de conversation, de diverses autres données (notamment des informations d'identification). Généralement, le codage DTMF est mis en oeuvre au moyen d'un clavier multifréquence d'un poste téléphonique. L'usager compose la séquence de caractères (par exemple les chiffres d'un numéro de téléphone) à l'aide de son clavier, chaque action sur ce demier permettant le codage et l'envoi d'un caractère.

Il est également connu d'utiliser le codage DTMF dans un objet portatif (par exemple au format carte de crédit, ou sous forme de jeton ou de calculette) du type destiné à être utilisé en combinaison avec un combiné téléphonique. Dans ce cas l'usager applique son objet portatif contre le combiné téléphonique, puis l'active (par exemple en appuyant sur un bouton prévu à cet effet). L'objet portatif compose alors de façon automatique une séquence de caractères, telle que par exemple une clé d'identification destinée à être vérifiée parun serveur vocal se trouvant au numéro appelé.

En général, le codage DTMF permet de transmettre des données à la vitesse de 4 à 8 caractères par seconde. Si cette vitesse est généralement suffisante pour transmettre des informations de numérotation, il n'en est pas de même pour toutes les informations, et notamment pour les codes d'identification. En effet, le nombre de caractères que peut composer un code d'identification est parfois assez grand. Du fait de la faible vitesse de transmission, le temps de transmission est alors très (et trop) long pour un usage normal parun particulier.

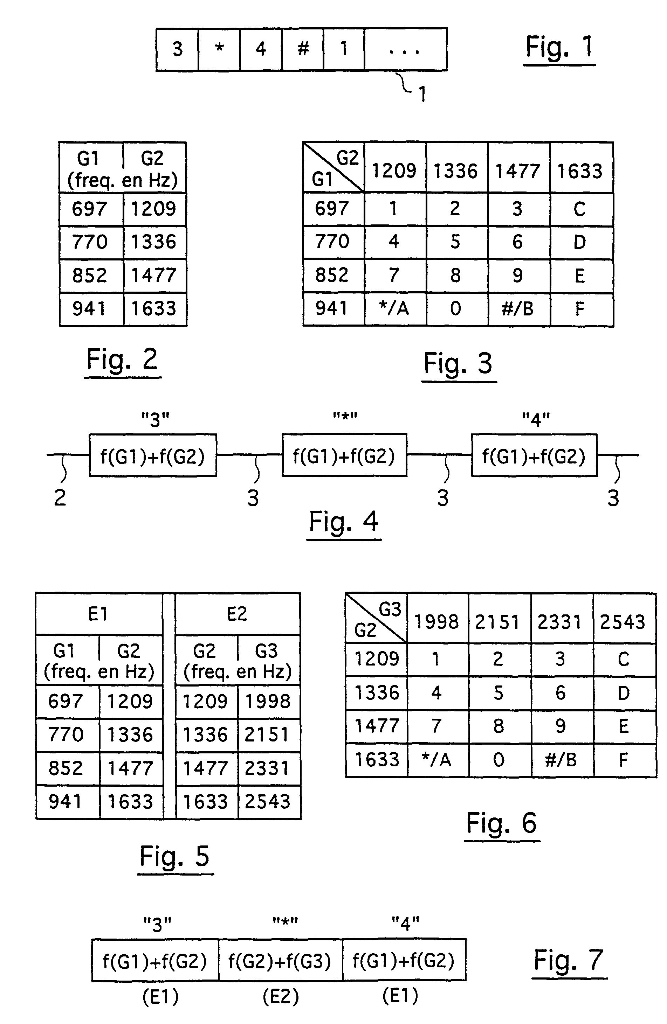

Ainsi qu'on le verra en se référant aux figures 1 à 4 qui décrivent les caractéristiques essentielles d'une transmission DTMF, il convient de ménager un blanc entre la transmission de deux caractères successifs. En effet lorsque deux caractères successifs sont identiques, les deux fréquences DTMF utilisées pour coder ce caractère sont les mêmes. Par conséquent si l'on n'insère pas un blanc entre deux caractères successifs identiques,l'un d'entre eux peut être perdu au moment du décodage. L'existence de ce blanc,dont la durée est comparable à la durée d'émission d'un caractère, réduit de moitié la vitesse théorique de transmission des caractères.

La demande de brevet EP, A 0 184 953 de Thomson-CSF du 18 juin 1986, ainsi que la demande de brevet DE, A 30 26 016 de Siemens du 21 janvier 1982, divulguent un procédé pour la génération et la transmission, à l'aide de fréquences vocales, d'une séquence de signaux dans laquelle les blancs séparant deux signaux successifs sont supprimés. Toutefois, le document EP, A 0 184 953 de Thomson-CSF du 18 juin 1986 ne concerne pas la transmission de signaux D'IMF et son enseignement ne leur est pas transposable. Par ailleurs, ni le document EP, A 0 184 953 de Thomson-CSF du 18 juin 1986, ni le document DE,A30 26 016 de Siemens du 21 janvier 1982 n'écarte le cas où deux caractères successifs pourraient donner lieu à des émissions identiques.

Ainsi, si Thomson-CSF et Siemens montrent qu'il est possible d'émettre des séquences ne comportant pas de blancs, ils n'abordent pas le problème technique auquel la présente invention apporte une solution, celui d'éviter les confusions ou les pertes d'information lors de la réception de deux caractères identiques successifs,ne comportant pas de blancs. Selon l'invention, ce problème est résolu et l'objectif d'accroître la vitesse de transmission des caractères est atteint

Le procédé selon l'invention permet de générer, à l'aide de fréquences vocales de type DTMF, une séquence comportant plusieurs caractères et de la transmettre rapidement à distance. La dite séquence est transmise par voie acoustique entre un objet portatif générant la dite séquence et le microphone d'un terminal. Le procédé comprend l'étape de supprimer, lors de la transmission, les blancs séparant deux caractères successifs. Il est caractérisé en ce que pour pouvoir supprimer les blancs :
- on code de manière distincte deux caractères successifs, préalablement à leur transmission, lorsqu'ils sont identiques,
- on procède à l'opération inverse, après transmission, afin d'obtenir la séquence d'origine

Selon une variante de réalisation préférentielle,
- on code les caractères par l'émission simultanée de N fréquences vocales (N supérieur ou égal à 2), chacune choisie parmi une sélection de N groupes de fréquences vocales, à raison d'une fréquence au plus par groupe ; les dits N groupes étant sélectionnés parmi N+1 groupes de fréquences vocales ; les fréquences de chaque groupe étant différentes de celles des autres groupes,
- on alterne régulièrement les N groupes sélectionnés parmi les N+1 groupes.

Plus particulièrement lorsque les caractères à transmettre sont extraits d'une matrice des seize caractères DTMF,
- on code les caractères par l'émission simultanée de deux fréquences vocales, chacune choisie parmi deux des trois groupes (G1, G2, G3) de quatre fréquences vocales, à raison d'une fréquence vocale choisie au plus par groupe, les fréquences de chaque groupe étant différentes de celles des autres groupes,
- on alterne régulièrement les deux groupes sélectionnés {(G1,G2), (G2,G3)} parmi les trois groupes (G1, G2, G3)

Ainsi on évite que deux caractères successifs soient générés avec les mêmes fréquences vocales. On peut donc transmettre les caractères les uns à la suite des autres sans temps d'interruption. La vitesse de transmission est augmentée et en pratique doublée. Préférentiellement la dite séquence appartient au groupe comprenant : des numéros de téléphone, des codes d'identification et des données de chiffrement.

L'invention concerne également un système permettant de générer, à l'aide de fréquences vocales de type DTMF, une séquence comportant plusieurs caractères représentant des données et de transmettre rapidement celles-ci à distance, en supprimant les blancs séparant deux caractères successifs. Le dit système est caractérisé en ce qu'il est composé :
- d'un objet portatif émettant des fréquences vocales de type DTMF, destiné à être utilisé en combinaison avec le microphone d'un terminal; le dit objet portatif comprend des moyens pour coder de manière distincte deux caractères successifs lorsqu'ils sont identiques, préalablement à leur transmission,
- d'un ordinateur, interconnecté au terminal via un réseau de communication, comportant des moyens pour procéder, après transmission, à l'opération inverse de décodage et reconstituer la séquence d'origine.

De préférence, l'objet portatif comporte :
* des moyens de génération de N+1 groupes de fréquences vocales, avec N supérieur ou égal à deux,
* des moyens de sélection de N fréquences vocales (N supérieur ou égal à deux), chacune choisie parmi une sélection de N groupes de fréquences vocales, à raison d'une fréquence au plus par groupe ; les dits N groupes étant sélectionnés parmi N+1 groupes de fréquences vocales ; les fréquences de chaque groupe étant différentes de celles des autres groupes,
* des moyens permettant d'alterner les sélections de N groupes,
* des moyens d'émission simultanée des N fréquences vocales sélectionnées,

L'invention concerne aussi un objet portatif émettant des fréquences vocales de type DTMF, destiné à être utilisé en combinaison avec un microphone d'un terminal. Le dit objet portatif comprend des moyens pour coder de manière distincte deux caractères successifs lorsqu'ils sont identiques, préalablement à leur transmission sur un réseau de communication interconnecté au terminal.

De préférence, l'objet portatif comporte :
* des moyens de génération de N+1 groupes de fréquences vocales, avec N supérieur ou égal à deux,
* des moyens de sélection de N fréquences vocales (N supérieur ou égal à deux), chacune choisie parmi une sélection de N groupes de fréquences vocales, à raison d'une fréquence au plus par groupe ; les dits N groupes étant sélectionnés parmi N+1 groupes de fréquences vocales ; les fréquences de chaque groupe étant différentes de celles des autres groupes,
* des moyens permettant d'alterner les sélections de N groupes,
* des moyens d'émission simultanée des N fréquences vocales sélectionnées.

L'invention concerne également un terminal multifréquence du type DTMF permettant à un usager de composer une séquence de caractères à transmettre sur un réseau téléphonique. Le dit terminal comprend des moyens pour coder de manière distincte deux caractères successifs lorsqu'ils sont identiques, préalablement à leur transmission sur un réseau de communication interconnecté au terminal.

De préférence, le terminal comporte :
* des moyens de génération de N+1 groupes de fréquences vocales, avec N supérieur ou égal à deux,
* des moyens de sélection de N fréquences vocales (N supérieur ou égal à deux), chacune choisie parmi une sélection de N groupes de fréquences vocales, à raison d'une fréquence au plus par groupe ; les dits N groupes étant sélectionnés parmi N+1 groupes de fréquences vocales ; les fréquences de chaque groupe étant différentes de celles des autres groupes,
* des moyens permettant d'alterner les sélections de N groupes ,
* des moyens d'émission simultanée des N fréquences vocales sélectionnées

D'autres caractéristiques et avantages de l'invention apparaîtront à la lecture de la description suivante de deux modes de réalisation préférentiels de l'invention, donnés à titre d'exemples indicatifs et non limitatifs, et des dessins annexés dans lesquels :
- la figure 1 présente un exemple de séquence de caractères générée à l'aide de fréquences vocales ;
- les figures 2 et 3 présentent respectivement les deux groupes de fréquences vocales utilisées dans le codage DTMF connu (fig. 2) et le tableau de codage correspondant (fig. 3) ;
- la figure 4 explicite la génération de la séquence de la figure 1 lorsque le codage DTMF connu est mis en oeuvre ;
- la figure 5 présente les deux ensembles de groupes de fréquences vocales utilisées dans un mode de réalisation particulier du procédé de l'invention ;
- la figure 6 présente le tableau de codage correspondant au second ensemble de groupes de fréquences vocales apparaissant sur la figure 5 ;
- la figure 7 explicite la génération de la séquence de la figure 1 lorsque le mode de réalisation particulier du procédé de l'invention est mis en oeuvre ;
- la figure 8 présente un schéma simplifié d'un mode de réalisation particulier du dispositif de codage multifréquence ; et
- la figure 9 présente un schéma simplifié d'un mode de réalisation particulier du système selon l'invention.

L'invention concerne donc un procédé et un système permettant de générer et transmettre, à l'aide de fréquences vocales, une séquence de caractères. Une telle séquence est généralement un numéro de téléphone, un code d'identification, ou encore une clé de chiffrement. Néanmoins, il est clair que la présente invention s'applique à n'importe quel type de séquence de caractères.

La figure 1 présente un exemple de séquence de caractères 1 générée à l'aide de fréquences vocales, par un dispositif de codage multifréquence connu ou bien par celui de l'invention. Dans cet exemple, les cinq premier caractères de la séquence 1 sont : "3", "*", "4", "#" et "1".

En relation avec les figures 2, 3 et 4, on rappelle maintenant brièvement les caractéristiques essentielles du codage DTMF connu. Comme présenté sur la figure 4, avec le codage DTMF, chaque caractère ("3", "*", "4", ...) de la séquence 1 est codé sous la forme d'une combinaison de deux fréquences {f(G1) + f(G2)}. En d'autres termes, une fréquence basse f(G1) et une fréquence haute f(G2) sont émises simultanément, de façon à générer un caractère. Chacune des deux fréquences f(G1), f(G2) émises simultanément est choisie parmi deux groupes de 4 fréquences, à raison de une fréquence au plus par groupe. Comme présenté sur la figure 2, il s'agit d'un groupe G1 de 4 fréquences basses et d'un groupe G2 de 4 fréquences hautes. On peut ainsi coder 4 x 4 = 16 caractères différents. Le tableau de codage de ces 16 caractères est présenté sur la figure 3. Il comprend les dix chiffres (0 à 9) et six caractères additionnels (lettres A à F), deux caractères spéciaux "*" et "#" étant codés de la même façon que les lettres A et B respectivement. Le premier caractère ("3") de la séquence 1 est précédé d'un silence de début 2, puis deux caractères successifs sont toujours séparés par un silence 3.

Le principe général de l'invention consiste à générer chaque caractère par l'émission simultanée de N fréquences vocales (N supérieur ou égal à 2), à choisir ces N fréquences vocales parmi N+1 groupes de fréquences vocales (alors que le codage DTMF n'utilise que deux groupes de fréquences vocales), puis à alterner régulièrement les N groupes sélectionnés parmi les N+1 groupes.

Si N est supérieur à 2, on augmente, par rapport au DTMF, le nombre de caractères différents pouvant être codés.

On présente maintenant, en relation avec les figures 5, 6 et 7, un mode de réalisation particulier du procédé de l'invention, dans lequel N est égal à 2.

Comme présenté sur la figure 7, avec ce mode réalisation de l'invention, chaque caractère ("3", "*", "4" , ...) de la séquence 1 est codé sous la forme d'une combinaison de 2 fréquences {f(G1) + f(G2)} ou {f(G2) + f(G3)}. Les deux fréquences vocales f(Gl) et f(G2), ou f(G2) et f(G3), sont choisies parmi des premier, second et troisième groupes de fréquence vocales G1, G2 et G3.

Ces groupes de fréquences vocales G1, G2 et G3 sont répartis en deux ensembles (cf. tableau de la figure 5), à savoir un premier ensemble E1 comprenant les premier et second groupes G1, G2, et un second ensemble E2 comprenant les second et troisième groupes G2, G3. Les premier et second groupes G1, G2 sont par exemple les deux groupes de fréquences utilisés classiquement en DTMF (ces derniers ont déjà été présentés ci-dessus, dans le cadre du rappel du procédé de codage DTMF). Dans ce cas le troisième groupe G3 comprend également 4 fréquences vocales.

Le tableau de codage associé au second ensemble E2 est présenté sur la figure 6. Celui-ci associé au premier ensemble El est présenté sur la figure 2. On notera que ces deux tableaux de 16 caractères sont identiques.

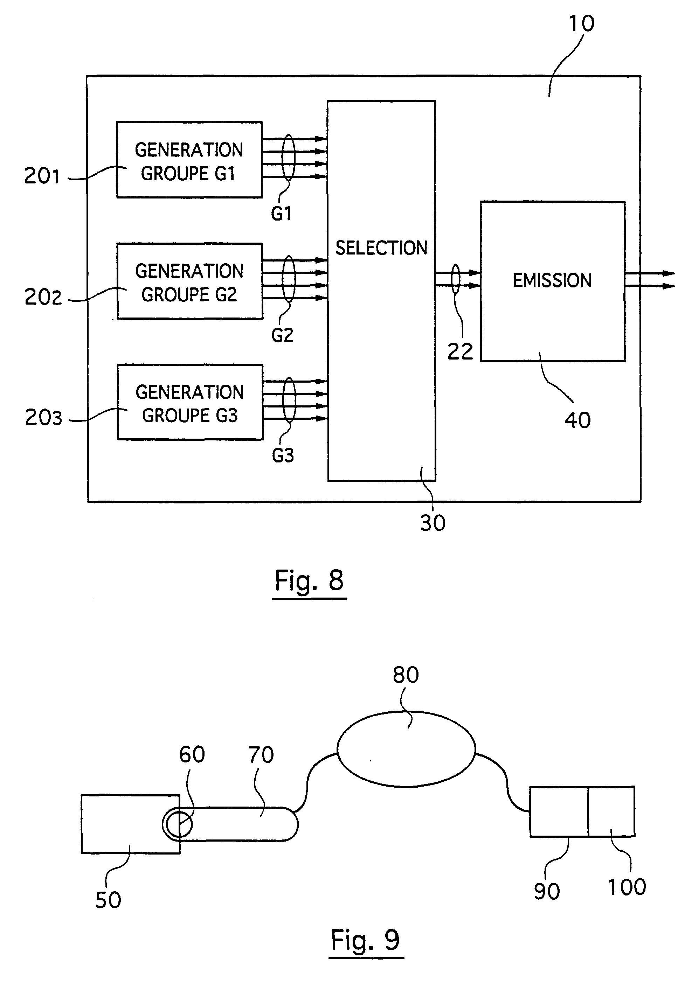

On utilise alternativement les deux ensembles El et E2 pour générer deux caractères successifs de la séquence 1. Ceci permet d'émettre deux caractères successifs, même s'ils sont identiques, sans silence intermédiaire. La vitesse démission standard passe de 8 à 16 caractères par seconde. On présente maintenant, en relation avec la figure 8, un mode de réalisation particulier du dispositif de codage multifréquence. Ce dispositif comprend
- des moyens 201, 202, 203 de génération de trois groupes G1, G2, G3 de fréquences vocales, chaque groupe de fréquences vocales comprenant par exemple quatre fréquences vocales ;
- des moyens 30 de sélection de deux fréquences vocales 22 parmi alternativement, les deux groupes de fréquences vocales E1 (G1, G2) et E2 (G2, G3),
- des moyens 40 d'émission simultanée des deux fréquences vocales sélectionnées 22.

La figure 9 présente un schéma simplifié d'un mode de réalisation particulier du système selon l'invention. Le système selon l'invention est composé :
- d'un objet portatif 50 émettant des fréquences vocales (ainsi qu'il a été décrit en se référant à la figure 8), destiné à être utilisé en combinaison avec le microphone 60 d'un terminal 70 (combiné téléphonique, ordinateur multimédia) ; ledit objet portatif comprenant
   * des moyens de génération 20 de N+1 groupes de fréquences vocales, avec N supérieur ou égal à 2 (N= 2 dans le cas de la figure 8),
   * des moyens de sélection 30 de N fréquences vocales choisies chacune parmi les N+1 groupes de fréquences vocales, à raison d'au plus une fréquence vocale par groupe,
   * des moyens 30 permettant d'alterner les combinaisons de N groupes,
   * des moyens d'émission simultanée 40 des N fréquences vocales sélectionnées,
- d'un réseau de communication 80 permettant de transmettre les caractères représentant les données, du microphone du combiné téléphonique à un ordinateur distant,
- d'un ordinateur 90 comportant des moyens 100 permettant de reconstituer la séquence de caractères d'origine et de traiter la dite séquence.

Il est clair que le premier ensemble E1 peut comprendre le premier et le second groupe G1, G2 et que le second ensemble E2 peut comprendre Les groupes G2 et G3 ou G1 et G3.

Il est clair également que l'homme du métier saura aisément généraliser à d'autres cas, et notamment au cas où N = 4 (5 groupes au total et 4 fréquences émises simultanément pour coder un caractère). Conséquemment la vitesse d'émission peut encore être augmentée s'il existe des dispositifs de réception accordés tant à ces fréquences vocales qu'à ces vitesses d'émission.

Le procédé et le système selon l'invention peuvent notamment être mis en oeuvre dans un objet portatif tel que décrit ci-dessus. Ils peuvent également être mis en oeuvre dans un terminal multifréquence permettant à un usager de composer une séquence de caractères (à transmettre sur le réseau téléphonique).

Afin de supprimer les blancs (ou silences intermédiaires) et afin d'augmenter la vitesse d'émission de caractères deux variantes ont également été envisagées.

Selon la première variante, deux caractères successifs sont émis avec un silence intermédiaire seulement s'ils sont identiques et, dans tous les cas où ils sont différents, les deux caractères successifs sont émis sans silence intermédiaire.

Selon la seconde variante, le codage multifréquence proprement dit est précédé d'une étape de traitement (fonction F), de façon à éviter que deux caractères successifs de la fréquence soient identiques. A la réception, le décodage multifréquence est suivi d'une étape de traitement inverse de la précédente (fonction F-1). Il est à la portée de l'homme du métier de choisir et mettre en oeuvre de tels opérateurs de traitement F et F-1 pour obtenir un tel résultat.

## Revendications

1. Procédé permettant de générer, à l'aide de fréquences vocales de type DTMF, une séquence (1) comportant plusieurs caractères et de la transmettre rapidement à distance ; la dite séquence étant transmise par voie acoustique entre un objet portatif générant la dite séquence et le microphone d'un terminal ; le dit procédé comprenant l'étape de supprimer, lors de la transmission, les blancs (3) séparant deux caractères successifs, le dit procédé étant caractérisé en ce que pour pouvoir supprimer les blancs :
- on code de manière distincte deux caractères successifs, préalablement à leur transmission, lorsqu'ils sont identiques,
- on procède à l'opération inverse, après transmission, afin d'obtenir la séquence d'origine

2. Procédé selon la revendication 1 caractérisé en ce que :
- on code les caractères par l'émission simultanée de N fréquences vocales (N supérieur ou égal à 2), chacune choisie parmi une sélection de N groupes de fréquences vocales, à raison d'une fréquence au plus par groupe ; les dits N groupes étant sélectionnés parmi N+1 groupes de fréquences vocales ; les fréquences de chaque groupe étant différentes de celles des autres groupes,
- on alterne régulièrement les N groupes sélectionnés parmi les N+1 groupes.

3. Procédé selon la revendication 2, les caractères à transmettre étant extraits d'une matrice des seize caractères DTMF, caractérisé en ce que :
- on code les caractères par l'émission simultanée de deux fréquences vocales, chacune choisie parmi deux des trois groupes (G1, G2, G3) de quatre fréquences vocales, à raison d'une fréquence vocale choisie au plus par groupe, les fréquences de chaque groupe étant différentes de celles des autres groupes,
- on alterne régulièrement les deux groupes sélectionnés {(G1,G2), (G2,G3)} parmi les trois groupes (G1, G2, G3)

4. Procédé selon l'une quelconque des revendications 1, 2 ou 3, caractérisé en ce que la séquence de plusieurs caractères appartient au groupe comprenant :
- des numéros de téléphone ;
- des codes d'identification ;
- des données de cryptage.

5. Système permettant de générer, à l'aide de fréquences vocales de type DTMF, une séquence comportant plusieurs caractères représentant des données et de transmettre rapidement celles-ci à distance, en supprimant les blancs séparant deux caractères successifs ; le dit système étant caractérisé en ce qu'il est comprend :
- d'un objet portatif (50) émettant des fréquences vocales de type DTMF, destiné à être utilisé en combinaison avec le microphone (60) d'un terminal (70) ; le dit objet portatif (50) comprenant des moyens (30) pour coder de manière distincte deux caractères successifs lorsqu'ils sont identiques, préalablement à leur transmission
- d'un ordinateur (90), interconnecté au terminal (70) via un réseau de communication (80), comportant des moyens (100) pour procéder, après transmission, à l'opération inverse de décodage et reconstituer la séquence d'origine.

6. Système selon la revendication 5 ; le dit objet portatif comportant :
* des moyens (20₁, 20₂, 20₃) de génération de N+1 groupes de fréquences vocales, avec N supérieur ou égal à 2,
* des moyens (30) de sélection de N fréquences vocales (N supérieur ou égal à 2), chacune choisie parmi une sélection de N groupes de fréquences vocales, à raison d'une fréquence au plus par groupe ; les dits N groupes étant sélectionnés parmi N+1 groupes de fréquences vocales ; les fréquences de chaque groupe étant différentes de celles des autres groupes,
* des moyens (30) permettant d'alterner les sélections de N groupes,
* des moyens (40) d'émission simultanée des N fréquences vocales sélectionnées,

7. Objet portatif (50) émettant, à l'aide de fréquences vocales de type DTMF, une séquence (1) comportant plusieurs caractères ; ledit objet portatif étant destiné à être utilisé en combinaison avec un microphone (60) d'un terminal (70) ; le dit objet portatif étant caractérisé en ce que pour supprimer, lors de la transmission, un blanc (3) séparant deux caractères successifs, il comprend des moyens (30) pour coder de manière distincte deux caractères successifs lorsqu'ils sont identiques, préalablement à leur transmission sur un réseau de communication (80) interconnecté au terminal (70).

8. Objet portatif selon la revendication 7 ; le dit objet portatif comportant
* des moyens (20₁, 20₂, 20₃) de génération de N+1 groupes de fréquences vocales, avec N supérieur ou égal à 2,
* des moyens (30) de sélection de N fréquences vocales (N supérieur ou égal à 2), chacune choisie parmi une sélection de N groupes de fréquences vocales, à raison d'une fréquence au plus par groupe ; les dits N groupes étant sélectionnés parmi N+1 groupes de fréquences vocales ; les fréquences de chaque groupe étant différentes de celles des autres groupes,
* des moyens (30) permettant d'alterner les sélections de N groupes,
* des moyens d'émission simultanée des N fréquences vocales sélectionnées.

9. Terminal multifréquence du type DTMF permettant à un usager de composer une séquence de caractères à transmettre sur un réseau téléphonique ; le dit terminal étant caractérisé en ce que pour supprimer, lors de la transmission, un blanc (3) séparant deux caractères successifs, il comprend des moyens pour coder de manière distincte deux caractères successifs lorsqu'ils sont identiques, préalablement à leur transmission sur un réseau de communication (80) interconnecté au terminal (70).

10. Terminal selon la revendication 9 comportant
* des moyens de génération de N+1 groupes de fréquences vocales, avec N supérieur ou égal à 2,
* des moyens (30) de sélection de N fréquences vocales (N supérieur ou égal à 2), chacune choisie parmi une sélection de N groupes de fréquences vocales, à raison d'une fréquence au plus par groupe ; les dits N groupes étant sélectionnés parmi N+1 groupes de fréquences vocales ; les fréquences de chaque groupe étant différentes de celles des autres groupes,
* des moyens (30) permettant d'alterner les sélections de N groupes ,
* des moyens d'émission simultanée des N fréquences vocales sélectionnées.

## Claims

1. Process making it possible to generate, with the aid of voice frequencies of DTMF type, a sequence (1) comprising several characters and to transmit it rapidly some distance; the said sequence being transmitted acoustically between a portable object generating the said sequence and the microphone of a terminal; the said process comprising the step of deleting, during transmission, the blanks (3) separating two successive characters,
the said process being characterized in that in order to be able to delete the blanks:
two successive characters are coded in a distinct manner prior to their transmission, when they are identical,
- the inverse operation is carried out, after transmission, so as to obtain the original sequence.

2. Process according to Claim 1, characterized in that:
- the characters are coded by simultaneous transmission of N voice frequencies (N greater than or equal to 2), each chosen from a selection of N groups of voice frequencies, at a rate of at most one frequency per group; said N groups being selected from among N + 1 groups of voice frequencies; the frequencies of each group being different from those of the other groups,
- the N groups selected from among the N + 1 groups are regularly alternated.

3. Process according to Claim 2, the characters to be transmitted being extracted from a matrix of the sixteen DTMF characters, characterized in that :
- the characters are coded by the simultaneous transmission of two voice frequencies, each chosen from among two of the three groups (G1, G2, G3) of four voice frequencies, at a rate of at most one chosen voice frequency per group, the frequencies of each group being different from those of the other groups,
- the two groups {(G1, G2), (G2, G3)} selected from among the three groups (G1, G2, G3) are regularly alternated.

4. Process according to any one of Claims 1, 2 or 3, characterized in that the sequence of several characters belongs to the group comprising:
- telephone numbers;
- identification codes;
- encryption data.

5. System making it possible to generate, with the aid of voice frequencies of DTMF type, a sequence comprising several characters representing data arid to transmit the latter rapidly some distance, by deleting the blanks separating two successive characters; the said system being characterized in that it comprises:
- a portable object (50) transmitting voice frequencies of DTMF type, which is intended to be used in combination with the microphone (60) of a terminal (70); the said portable object (50) comprising means (30) for coding two successive characters in a distinct manner when they are identical, prior to their transmission
- a computer (90), interconnected with the terminal (70) via a communication network (80), comprising means (100) for carrying out, after transmission, the inverse decoding operation and for reconstructing the original sequence.

6. System according to Claim 5; the said portable object comprising:
* means (20₁, 20₂, 20₃) of generating N + 1 groups of voice frequency, with N greater than or equal to 2,
* means (30) for selecting N voice frequencies (N greater than or equal to 2), each chosen from among a selection of N groups of voice frequencies, at a rate of at most one frequency per group; the said N groups being selected from among N + 1 groups of voice frequencies ; the frequencies of each group being different from those of the other groups,
* means (30) making it possible to alternate the selections of N groups,
* means (40) of simultaneous transmission of the N selected voice frequencies.

7. Portable object (50) transmitting, with the aid of voice frequencies of DTMF type, a sequence (1) comprising several characters; the said portable object being intended to be used in combination with a microphone (60) of a terminal (70) ; the said portable object being characterized in that in order to delete, during transmission, a blank (3) separating two successive characters, it comprises means (30) for coding two successive characters in a distinct manner when they are identical, prior to their transmission over a communication network (80) interconnected with the terminal (70).

8. Portable object according to Claim 7; the said portable object comprising
* means (20₁, 20₂, 20₃) of generating N + 1 groups of voice frequency, with N greater than or equal to 2,
* means (30) for selecting N voice frequencies (N greater than or equal to 2), each chosen from among a selection of N groups of voice frequencies, at a rate of at most one frequency per group; the said N groups being selected from among N + 1 groups of voice frequencies; the frequencies of each group being different from those of the other groups,
* means (30) making it possible to alternate the selections of N groups,
* means of simultaneous transmission of the N selected voice frequencies.

9. Multifrequency terminal of the DTMF type making it possible for a user to dial a sequence of characters to be transmitted over a telephone network; the said terminal being characterized in that in order to delete, during transmission, a blank (3) separating two successive characters, it comprises means for coding two successive characters in a distinct manner when they are identical, prior to their transmission over a communication network (80) interconnected with the terminal (70).

10. Terminal according to Claim 9 comprising
* means of generating N + 1 groups of voice frequency, with N greater than or equal to 2,
* means (30) for selecting N voice frequencies (N greater than or equal to 2), each chosen from among a selection of N groups of voice frequencies, at a rate of at most one frequency per group; the said N groups being selected from among N + 1 groups of voice frequencles; the frequencies of each group being different from those of the other groups,
* means (30) making it possible to alternate the selections of N groups,
* means of simultaneous transmission of the N selected voice frequencies.

## Patentansprüche

1. Verfahren zum Erzeugen einer mehrere Zeichen umfassenden Folge (1) mit Hilfe von Vokalfrequenzen des Typs DTMF und sie schnell in die Ferne zu übertragen, wobei die Folge auf akustischem Weg zwischen einem tragbaren Gegenstand, der diese Folge erzeugt und dem Mikrophon eines Terminals übertragen wird, wobei das Verfahren einen Schritt umfaßt, bei dem im Laufe der Übertragung die Leerstellen (3) zwischen zwei aufeinanderfolgende Zeichen eliminiert werden; das Verfahren ist dadurch gekennzeichnet, daß zum Eliminieren der Leerstellen;
- zwei aufeinanderfolgende Zeichen vor der Übertragung in verschiedener Weise kodiert werden, falls sie identisch sind,
- nach der Übertragung in umgekehrter Reihenfolge vorgegangen wird, um die Ausgangsfolge wieder herzustellen.

2. Verfahren gemäß Anspruch 1,
dadurch gekennzeichnet, daß:
- die Zeichen durch gleichzeitiges Übertragen von N Vokalfrequenzen kodiert werden (wobei N größer oder gleich 2 ist), die jeweils unter einer Auswahl von N Gruppen von Vokalfrequenzen gewählt werden, wobei höchstens eine Frequenz je Gruppe gewählt wird, wobei die N Gruppen unter N + Gruppen von Vokalfrequenzen gewählt werden und wobei die Frequenz einer jeden Gruppe sich von derjenigen der anderen Gruppen unterscheidet,
- die unter den N + 1 Gruppen ausgewählten N Gruppen regelmäßig ausgetauscht werden.

3. Verfahren gemäß Anspruch 2, wobei die zu übertragenden Zeichen aus einer Matrix von sechzehn DTMF-Zeichen extrahiert werden,
dadurch gekennzeichnet, daß:
- die Zeichen durch gleichzeitiges Senden zweier Vokalfrequenzen kodiert werden, die jeweils aus zwei der drei Gruppen (G1, G2, G3) von vier Vokalfrequenzen gewählt werden, wobei höchstens eine Vokalfrequenz je Gruppe gewählt wird und wobei die Frequenzen einer jeden Gruppe sich von denen der anderen Gruppen unterscheiden,
- die zwei unter den drei Gruppen (G1, G2, G3) gewählten Gruppen {(G1,G2),(G2,G3} regelmäßig ausgetauscht werden.

4. Verfahren gemäß einem der Ansprüche 1, 2 oder 3,
dadurch gekennzeichnet, daß die Folge mehrerer Zeichen der Gruppe angehört, die folgendes umfaßt;
- Telefonnummern,
- Identifikationscodes,
- Verschlüsselungsdaten,

5. System, welches mit Hilfe von Vokalfrequenzen des DTMF-Typs das Erzeugen einer Folge ermöglicht, die mehrere Zeichen umfaßt, welche Daten darstellen und diese schnell in die Ferne zu übertragen, wobei die Leerstellen zwischen je zwei Zeichen eliminiert werden. Das System ist dadurch gekennzeichnet, daß es folgendes umfaßt:
- einen tragbaren Gegenstand (50), der Vokalfrequenzen des Typs DTMF sendet und der zusammen mit dem Mikrophon (60) eines Terminals (70) verwendet werden soll, wobei der tragbare Gegenstand (50) Mittel (30) umfaßt, um zwei aufeinanderfolgende Zeichen vor der Übertragung in verschiedener Weise zu kodieren, wenn diese identisch sind,
- einen Rechner (90), der über ein Kommunikationsnetz (80) mit dem Terminal (70) verbunden ist und der über Mittel (100) verfügt, um nach dem Senden die umgekehrte Dekodierung durchzuführen, um die Ausgangsfolge wiederherzustellen.

6. System gemäß Anspruch 5, wobei der tragbare Gegenstand folgendes umfaßt:
* Mittel (20₁, 20₂, 20₃) zum Erzeugen von N + 1 Gruppen von Vokalfrequenzen, wobei N größer oder gleich 2 ist,
* Auswahlmittel (30) für N Vokalfrequenzen (N größer oder gleich 2), die jeweils aus einer Auswahl von N Gruppen von Vokalfrequenzen ausgewählt sind, wobei höchstens eine Frequenz je Gruppe gewählt wird, wobei die N Gruppen unter N+1 Gruppen von Vokalfrequenzen gewählt werden und wobei die Frequenz einer jeden Gruppe sich von derjenigen der anderen Gruppen unterscheidet,
* Mittel (30), mit denen die Auswahlverfahren von N Gruppen ausgetauscht werden können,
* Mittel (40) zum gleichzeitigen Senden der N gewählten Vokalfrequenzen.

7. Tragbarer Gegenstand (50), der mit Hilfe von Vokalfrequenzen des Typs DTMF eine Folge (1) sendet, welche mehrere Zeichen umfaßt, wobei der tragbare Gegenstand zusammen mit dem Mikrophon (60) eines Terminals (70) verwendet werden soll. Der tragbare Gegenstand ist dadurch gekennzeichnet, daß, um während der Übertragung eine Leerstelle (3) zu eliminieren, welche zwei aufeinanderfolgende Zeichen trennt, er über Mittel (30) verfügt, um zwei aufeinanderfolgende Zeichen unterschiedlich zu kodieren, falls sie identisch sind, vor ihrer Übertragung über ein Kommunikationsnetzwerk (80), das mit dem Terminal (70) verbunden ist.

8. Tragbarer Gegenstand gemäß Anspruch 7, der folgendes umfaßt:
* Mittel (20₁, 20₂, 20₃) zum Erzeugen von N+1 Gruppen von Vokalfrequenzen, wobei N größer oder gleich 2 ist,
* Auswahlmittel (30) für N Vokalfrequenzen IN größer oder gleich 2), die jeweils aus einer Auswahl von N Gruppen von Vokalfrequenzen ausgewählt sind, wobei höchstens eine Frequenz je Gruppe gewählt wird, wobei die N Gruppen unter N+1 Gruppen von Vokalfrequenzen gewählt werden und wobei die Frequenz einer jeden Gruppe sich von derjenigen der anderen Gruppen unterscheidet,
* Mittel (30), mit denen die Auswahlverfahren von N Gruppen ausgetauscht werden können,
* Mittel zum gleichzeitigen Senden der N gewählten Vokalfrequenzen,

9. Mehrfrequenzterminal vom Typ DTMF, mit dem ein Benutzer eine Folge von Zeichen zusammenstellen kann, die über ein Telefonnetz übertragen werden sollen. Das Terminal ist dadurch gekennzeichnet, daß, um im Laufe der Übertragung eine Leerstelle (3) zu eliminieren, welche zwei aufeinanderfolgende Zeichen trennt, es über Mittel verfügt, um zwei aufeinanderfolgende Zeichen unterschiedlich zu kodieren, falls sie identisch sind, vor ihrer Übertragung über ein Kommunikationsnetzwerk (80), das mit dem Terminal (70) verbunden ist,

10. Terminal gemäß Anspruch 9, das folgendes umfaßt:
* Mittel zum Erzeugen von N+1 Gruppen von Vokalfrequenzen, wobei N größer oder gleich 2 ist,
* Auswahlmittel (30) für N Vokalfrequenzen (N größer oder gleich 2), die jeweils aus einer Auswahl von N Gruppen von Vokalfrequenzen ausgewählt sind, wobei höchstens eine Frequenz je Gruppe gewählt wird, wobei die N Gruppen unter N+1 Gruppen von Vokalfrequenzen gewählt werden und wobei die Frequenz einer jeden Gruppe sich von derjenigen der anderen Gruppen unterscheidet,
* Mittel (30), mit denen die Auswahlverfahren von N Gruppen ausgetauscht werden können,
* Mittel zum gleichzeitigen Senden der N gewählten Vokalfrequenzen,
